# DEMANDE DE BREVET EUROPEEN

(11) **EP 0 901 005 A1**
(43) Date de publication de la demande: **10.03.1999**
(21) Numéro de dépôt: 98402176.6
(22) Date de dépôt: 02.09.1998
(51) Int. Cl.: G01K 1/16, A61J 9/02, G01K 11/16

(54) **Dispositif indicateur de température pour récipient contenant un produit alimentaire à chauffer et récipient portant un tel dispositif**

(30) Priorité: 05.09.1997 FR 9711084
(71) Demandeur: SEB S.A., 69130 Ecully (FR)
(72) Inventeur: Doumeng, Lionel, 74150 Marcellaz-Albanais (FR)
(74) Mandataire: Keib, Gérard

(57) **Abrégé**

Le dispositif indicateur de température (1) comprend un mélange de composés susceptible d'un changement de couleur dans la plage de température désirée pour la consommation du produit alimentaire.

Ce mélange de composés fait apparaître sur un fond (2) un message tel que "OK" lorsque la plage de température ci-dessus est atteinte.

## Description

La présente invention concerne un dispositif pour indiquer la température d'un récipient contenant un produit alimentaire destiné à être chauffé.

L'invention vise également un récipient destiné à contenir un produit alimentaire à chauffer portant un dispositif indicateur de la température du type précité.

L'invention a pour but en particulier d'informer l'utilisateur que la température optimale pour la consommation du produit alimentaire est atteinte.

On connaît des biberons équipés d'un dispositif indicateur de la température comportant un composé ou mélange de composés susceptible d'un changement de couleur dans une plage de température correspondant à celle désirée pour la consommation du lait.

Cependant les solutions connues ne donnent pas satisfaction aux utilisateurs pour plusieurs raisons.

D'une part, ces indicateurs de température se détériorent lors des stérilisations, des passages au lave vaisselle etc...

D'autre part, le changement de couleur est parfois difficilement perceptible par les utilisateurs ou ne constitue pas un avertissement suffisant pour ceux-ci. Il en résulte un risque de brûlure si la température de consommation est trop élevée.

Le but de la présente invention est de proposer un dispositif indicateur de température remédiant aux inconvénients ci-dessus.

L'invention vise ainsi un dispositif pour indiquer la température d'un récipient contenant un produit alimentaire destiné à être chauffé, comprenant un composé ou mélange susceptible d'un changement de couleur dans une plage de température correspondant à celle désirée pour la consommation du produit alimentaire.

Suivant l'invention, ce dispositif est caractérisé en ce que le composé ou le mélange de composés susceptible d'un changement de couleur fait apparaître un message unique lorsque la plage de température précitée est atteinte.

Ainsi, lorsque la plage de température désirée pour la consommation du produit alimentaire est atteinte, l'utilisateur perçoit non seulement un changement de couleur, mais l'apparition d'un message qui lui indique d'une manière précise que le produit est prêt à être consommé.

De préférence, ledit message est constitué par plusieurs lettres qui, lorsque ladite plage de température est atteinte se détachent sur un fond dont la couleur correspond à celle du composé ou du mélange de composés avant son changement de couleur.

Le message peut par exemple être constitué par les deux lettres "OK" qui indiquent clairement que le produit alimentaire est "OK" c'est-à-dire bon à être consommé.

Un tel message ne risque pas d'être mal interprété par l'utilisateur.

De préférence, le composé ou mélange de composés susceptible d'un changement de couleur est un mélange de cristaux liquides.

L'invention concerne également un récipient destiné à contenir un produit alimentaire à chauffer et en particulier un biberon portant un dispositif indicateur de température selon l'invention.

Dans le cas d'un biberon, le mélange de cristaux liquides change de couleur dans une plage de températures comprise entre 35°C et 44°C.

Le mélange de cristaux liquides est noir lorsque la température est inférieure à 35°C.

Dans la plage de température comprise entre 35°C et 44°C les cristaux liquides virent progressivement du rouge au vert puis au bleu. Cette variation de couleur est susceptible de tromper les utilisateurs, d'autant plus que les cristaux liquides virent de nouveau au noir lorsque la température dépasse 44°C. Cependant, le message qui apparaît dans la bonne plage de température garantit une sécurité absolue.

D'autres particularités et avantages de l'invention apparaîtront encore dans la description ci-après.

Aux dessins annexés donnés à titre d'exemples non limitatifs.
- la figure 1 est une vue en élévation d'un biberon équipé d'un indicateur de température conforme à l'invention ;
- la figure 2 est une vue analogue à la figure 1, l'indicateur de température faisant apparaître un message signalant que la température de consommation est atteinte.

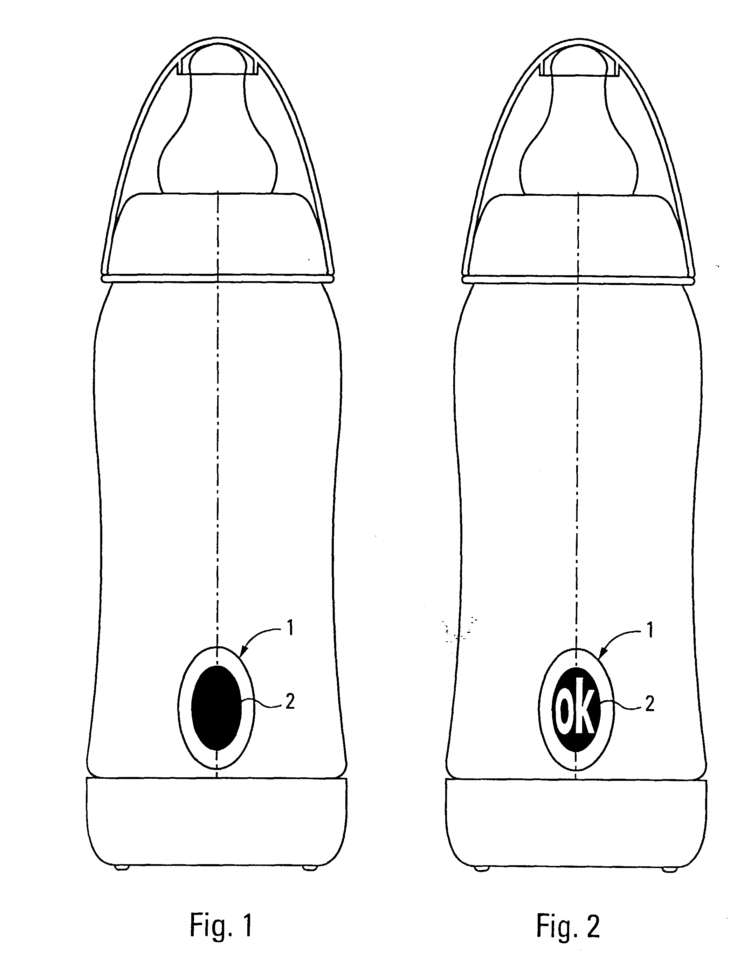

Le biberon représenté sur les figures 1 et 2 porte sur sa face extérieure, un dispositif 1 indicateur de température selon l'invention.

Ce dispositif se présente sous la forme d'une étiquette par exemple en polyester ou polycarbonate qui est collée sur le biberon au moyen d'une colle qui résiste à la vapeur d'eau , à l'eau bouillante, aux micro-ondes, au lave-vaisselle; à la stérilisation chimique et autres.

L'étiquette 1 porte un mélange de cristaux liquides qui change de couleur dans une plage de température comprise en 35°C et 44°C.

Cette plage de température est reconnue par les pédiatres comme étant optimale pour la consommation du lait par les bébés.

Le mélange de cristaux liquides est appliqué sur la face interne, c'est-à-dire celle adjacente au biberon, de façon à configurer un message constitué par des lettres telles que "OK"

Ce mélange peut également être appliqué sur la face précitée de l'étiquette sous la forme d'une couche recouverte par un masque dans lequel le message ci-dessus a été découpé.

Dans les deux cas, le mélange de cristaux liquides est protégé à l'égard du milieu environnant par l'étiquette en polyester ou polycarbonate.

Par ailleurs, l'étiquette est collée sur une surface plane et elle se situe dans un logement afin de la protéger de toute agression mécanique.

Le message OK apparaît (voir figure 2) lorsque le biberon chauffé par exemple au moyen d'un chauffe-biberon atteint une température comprise entre 35°C et 44°C du fait du changement de couleur du mélange de cristaux liquides.

Le message "OK" se détache sur un fond 2 dont la couleur correspond à celle du mélange de cristaux liquides lorsque la température est inférieure à 35°C.

Ainsi, lorsque la température est inférieure à 35°C ou supérieure à 44°C, le message "OK" est invisible et signale à l'utilisateur que la température n'est pas appropriée à la consommation.

Le message "OK" n'est visible que lorsque la plage de température est comprise entre 35°C et 44°C. De ce fait, l'utilisateur ne risque pas d'être induit en erreur.

Bien entendu le message "OK" pourrait être remplacé par tout autre message constitué par des lettres ou un signe facilement compréhensible par tous les utilisateurs.

Bien entendu, le dispositif indicateur de température peut être appliqué sur d'autres récipient que des biberons contenant un produit alimentaire à chauffer.

En particulier, le dispositif indicateur de température pourrait être appliqué sur les pots contenant des aliments pour bébés et autres.

## Revendications

1. Dispositif (1) pour indiquer la température d'un récipient contenant un produit alimentaire destiné à être chauffé, comprenant un composé ou mélange susceptible d'un changement de couleur dans une plage de température correspondant à celle désirée pour la consommation du produit alimentaire, caractérisé en ce que le composé ou le mélange de composés susceptible d'un changement de couleur fait apparaître un message unique lorsque la plage de température précitée est atteinte ledit message étant constitué par plusieurs lettres qui, lorsque ladite plage de température est atteinte se détachent sur un fond (2) dont la couleur correspond à celle du composé ou du mélange de composés avant son changement de couleur.

2. Dispositif conforme à la revendication 1, caractérisé en ce que le composé ou mélange de composés susceptible d'un changement de couleur est un mélange de cristaux liquides.

3. Récipient destiné à contenir un produit alimentaire à chauffer portant un dispositif (1) indicateur de la température selon l'une des revendicationsl ou 2.

4. Récipient conforme à la revendication 3, constitué par un biberon.

5. Biberon conforme à la revendication 4, caractérisé en ce que le mélange de cristaux liquides change de couleur dans une plage de températures comprise entre 35°C et 44°C.

6. Récipient ou biberon conforme à l'une des revendications 3 à 5, caractérisé en ce qu'il porte une étiquette (1) supportant un mélange de cristaux dont le changement de couleur fait apparaître un message indiquant à l'utilisateur que la température optimale pour la consommation du produit alimentaire est atteinte.

7. Récipient ou biberon conforme à l'une des revendications 3 à 6, caractérisé en ce que l'étiquette est collée sur une surface plane et qu'elle se situe dans un logement afin de la protéger de toute agression mécanique.
